# DEMANDE DE BREVET EUROPEEN

(11) **EP 4 810 735 A1**
(43) Date de publication de la demande: **23.09.2026**
(21) Numéro de dépôt: 26164931.3
(22) Date de dépôt: 16.03.2026
(51) Int. Cl.: E04B 1/58, E04D 13/068, E04D 13/15, E04D 3/08, E04D 13/08, E06B 9/24, E04B 1/68, E04H 6/02

(54) **ASSEMBLAGE POUR LE MAINTIEN DE PROFILÉS**

(30) Priorité: 19.03.2025 FR 2502777
(71) Demandeur: Caillau, 41200 Romorantin-Lanthenay (FR)
(72) Inventeur: SEGRET, Henribert, 41210 La Ferté Beauharnais (FR)
(74) Mandataire: Cabinet Beau de Loménie

(57) **Abrégé**

Assemblage pour le maintien bout à bout d'un premier profilé (30) par rapport à un deuxième profilé (40), comprenant un joint (10) en matériau élastomère, le joint (10) ayant une première extrémité (11) configurée pour épouser un bout (31) du premier profilé (30) et une deuxième extrémité (12) configurée pour épouser un bout (41) du deuxième profilé (40), et une éclisse (20) plus rigide que le joint et configurée pour se fixer au premier profilé (30) et au deuxième profilé (40) tout en maintenant le joint (10).

## Description

### Domaine technique

Le présent exposé concerne le domaine des assemblages mécaniques, et plus particulièrement un assemblage pour le maintien bout à bout d'un premier profilé par rapport à un deuxième profilé. Un tel assemblage trouve de multiples applications dans tous les domaines où des profilés sont utilisés, notamment mais non exclusivement pour les gouttières, les structures de toit et les ombrières.

### Technique antérieure

Dans le domaine de l'assemblage, une éclisse désigne une pièce qui unit et maintient ensemble deux éléments allongés. Traditionnellement utilisée pour unir des rails de chemin de fer, l'éclisse s'est ensuite répandue à de nombreux autres domaines d'application. Dans les domaines dans lesquels une étanchéité de la liaison entre deux profilés était nécessaire, il a été envisagé d'appliquer aux bords de l'éclisse une bande bitumineuse. Toutefois, cette solution ralentit significativement le montage et le rend plus coûteux.

Des tentatives de conception d'une éclisse intégrant directement des fonctions supplémentaires, telle que l'étanchéité, ont été effectuées. Cela a cependant conduit à concevoir une pièce complexe, présentant de nombreuses contraintes et, de ce fait, d'utilisation malaisée.

L'invention vise au moins à remédier en partie à ces inconvénients.

### Exposé de l'invention

A cet effet, le présent exposé concerne un assemblage pour le maintien bout à bout d'un premier profilé par rapport à un deuxième profilé, comprenant un joint en matériau élastomère, le joint ayant une première extrémité configurée pour épouser un bout du premier profilé et une deuxième extrémité configurée pour épouser un bout du deuxième profilé, le joint (10) étant configuré pour être intercalé entre le premier profilé (30) et le deuxième profilé (40) à la façon d'un tuilage, et une éclisse plus rigide que le joint et configurée pour se fixer au premier profilé et au deuxième profilé tout en maintenant le joint.

Au sens du présent exposé et sauf indication contraire, la mention d'un « premier » élément et d'un « deuxième » élément, tel qu'un premier profilé et un deuxième profilé, n'implique pas nécessairement de relation d'ordre entre le premier et le deuxième élément. Les qualificatifs ordinaux sont, dans ce contexte, employés à des seules fins de clarté et d'identification, sans préjuger de caractéristiques particulières. De plus, un élément mentionné sans son adjectif ordinal peut désigner l'un ou l'autre de ces éléments, voire les deux éléments. Ainsi, par exemple, les propriétés exposées à propos d'un profilé, de manière générale, peuvent s'appliquer au premier profilé, au deuxième profilé ou à la fois au premier profilé et au deuxième profilé.

Au sens du présent exposé, un profilé est une pièce s'étendant principalement selon une direction longitudinale. Une direction transversale désigne toute direction d'un plan orthogonal à la direction longitudinale, aussi appelé plan transversal. Le profilé peut avoir une section transversale constante ou sensiblement constante, typiquement constante abstraction faite d'effets de bords ou de variations isolées.

Les profilés ont vocation à être disposés bout à bout : un bout du premier profilé est en regard (à distance) ou en contact avec un bout du deuxième profilé. Lesdits bouts peuvent être prévus à des extrémités respectives des profilés correspondants.

Le joint épouse d'une part un bout du premier profilé, d'autre part un bout du deuxième profilé. Etant en matériau élastomère, le joint peut épouser lesdits bouts avec une grande proximité, ce qui permet d'augmenter l'efficacité d'étanchéité mais aussi les tolérances lors de la fabrication du joint par rapport à une pièce d'étanchéité métallique.

L'éclisse peut être une pièce différente du joint. Grâce au fait que l'éclisse est plus rigide que le joint, l'éclisse peut maintenir les profilés l'un par rapport à l'autre tandis que la fonction d'étanchéité peut être assurée par le joint. L'éclisse peut donc avoir une forme plus simple que le joint. Par ailleurs, le joint étant maintenu par rapport aux profilés grâce à l'éclisse, aucun moyen de fixation supplémentaire n'est nécessaire.

Le premier profilé et le deuxième profilé peuvent s'étendre selon la même direction longitudinale, par exemple dans le prolongement l'un de l'autre. Dans cette hypothèse, la première extrémité du joint peut être opposée à la deuxième extrémité du joint dans la direction longitudinale. Alternativement, les profilés peuvent former un angle l'un par rapport à l'autre, la forme du joint pouvant suivre l'angle ainsi formé.

Les extrémités du joint peuvent avoir une section transversale sensiblement constante, ce qui leur permet d'épouser les bouts respectifs des profilés correspondants sur une certaine longueur, donc d'améliorer l'étanchéité réalisée.

Dans certains modes de réalisation, le joint comprend au moins une contre-dépouille en section transversale. Du fait de la contre-dépouille, un joint rigide ne pourrait normalement pas être assemblé à l'un ou l'autre des profilés par un mouvement autre qu'un coulissement longitudinal. Toutefois, grâce au fait que le joint est en matériau élastomère, le joint peut être déformé pour s'insérer transversalement sur le profilé malgré la contre-dépouille. Une fois en position, la contre-dépouille du joint, qui de préférence coopère avec ou épouse une contre-dépouille correspondante sur le profilé, évite que le joint ne se déplace transversalement par rapport au profilé. Il s'ensuit un montage plus rapide et plus fiable.

Dans certains modes de réalisation, la première extrémité du joint et la deuxième extrémité du joint ont des formes et/ou des dimensions différentes. Cela permet d'épouser des profilés ayant des caractéristiques différentes, ou différentes parties de profilés potentiellement identiques.

Ainsi, dans certains modes de réalisation, la première extrémité forme une extrémité femelle configurée pour épouser un premier côté du bout du premier profilé et la deuxième extrémité forme une extrémité mâle configurée pour épouser un côté différent, ou deuxième côté, du bout du deuxième profilé.

L'extrémité femelle peut être configurée pour recevoir le bout du premier profilé. Inversement, l'extrémité mâle peut être configurée pour être reçue dans le bout du deuxième profilé. Ainsi, le joint est intercalé entre les profilés à la façon d'un tuilage. L'étanchéité entre le premier profilé et le deuxième profilé est donc renforcée.

Dans certains modes de réalisation, le joint comprend une transition continue et/ou monotone entre la première extrémité et la deuxième extrémité. Une transition continue qualifie l'absence de discontinuités (trous ou marches notamment). Une transition monotone signifie, conformément au sens mathématique du terme, que la forme du joint évolue progressivement de la forme de la première extrémité vers la forme de la deuxième extrémité, sans pic (extremum local intermédiaire) ou oscillation. En particulier, en section transversale, la transition est entièrement contenue entre la forme de la première extrémité et la forme de la deuxième extrémité. Une transition continue et monotone permet une évolution douce entre la première extrémité et la deuxième extrémité, ce qui est souhaitable non seulement pour faciliter l'écoulement de l'eau mais aussi pour faciliter le démoulage et éviter les fissures lors de la fabrication du joint.

Dans certains modes de réalisation, le joint est configuré pour être au moins partiellement pris en sandwich entre l'éclisse et l'un des profilés. Ainsi, en position monté, au moins une partie du joint est située, idéalement comprimée, entre l'éclisse et l'un des profilés. Le joint peut ainsi être maintenu fermement par rapport aux profilés. Par exemple, une extrémité du joint peut être prise en sandwich entre l'éclisse et le bout du profilé qu'elle épouse.

Dans certains modes de réalisation, en section transversale, le joint définit un renfoncement. Un tel renfoncement permet de monter le joint à cheval sur le profilé, ou inversement de monter le profilé à cheval sur le joint. Grâce au renfoncement, qui est destiné à se positionner à l'intérieur ou à l'extérieur d'un profilé, le joint peut épouser une large portion transversale du profilé, voire l'ensemble du profilé en section transversale, ce qui renforce encore l'étanchéité obtenue.

Par exemple, le joint peut avoir une forme générale de U, de V ou d'oméga (Ω) transversalement aux profilés.

Dans certains modes de réalisation, l'éclisse est plus longue que le joint. La longueur peut être mesurée selon la direction longitudinale. D'une part, le fait que le joint soit en matériau élastomère permet d'avoir, à longueur égale, une meilleure étanchéité qu'une pièce métallique ; par suite, à performance d'étanchéité égale, la longueur du joint élastomère peut être réduite, ce qui facilite le montage et diminue les coûts. D'autre part, le fait que l'éclisse soit plus longue que le joint permet de fixer l'éclisse aux profilés sans que les moyens de fixation n'interfèrent avec le joint.

Dans certains modes de réalisation, lorsque l'éclisse est fixée aux profilés, l'éclisse est au moins partiellement à distance du joint. Par exemple, au moins dans certaines sections transversales, une partie de l'éclisse peut être à distance de la partie du joint la plus proche. Du fait que le joint épouse les bouts des profilés à des fins d'étanchéité, l'éclisse peut avoir une forme plus simple que celle du joint, ce qui facilite la fabrication.

Les profilés peuvent former une gouttière. En particulier, une partie des profilés peut être prévue pour recueillir l'eau s'écoulant sur le profilé et acheminer cette eau vers un bout du profilé. Le joint permet alors à l'eau qui s'écoule de passer d'un profilé à l'autre en limitant, voire en évitant les fuites.

Le présent exposé concerne également une structure, telle qu'une ombrière, comprenant deux profilés maintenus bout à bout par un assemblage tel que décrit précédemment. Les profilés peuvent former, par exemple, les longerons de l'ombrière, qui sont disposés dans la direction du rampant pour soutenir des panneaux solaires ou photovoltaïques.

Dans certains modes de réalisation, les profilés sont fixés l'un à l'autre par au moins une vis traversant le premier profilé et/ou le deuxième profilé, et traversant l'éclisse. La fixation est donc particulièrement simple et la vis peut être serrée conformément au niveau de compression souhaité pour le joint. Selon un exemple, une vis peut traverser le premier profilé et l'éclisse, tandis qu'une autre vis traverse le deuxième profilé et l'éclisse. La vis précitée peut traverser ou non le joint.

Dans certains modes de réalisation, les profilés sont inclinés et l'extrémité mâle du joint est située à une altitude plus élevée que l'extrémité femelle du joint. Ainsi, sous l'effet de la gravité, l'eau ruisselle sur le deuxième profilé au bout duquel se trouve l'extrémité mâle, puis sur le joint, puis particulièrement sur l'extrémité femelle du joint, puis sur le premier profilé. L'étanchéité entre le premier profilé et le deuxième profilé est donc renforcée.

Le présent exposé concerne également un procédé d'assemblage d'un premier profilé par rapport à un deuxième profilé, comprenant la fourniture d'un premier profilé, la fourniture d'un joint en matériau élastomère, le montage d'une première extrémité du joint de façon à épouser un bout du premier profilé, le montage d'un bout d'un deuxième profilé de façon à épouser une deuxième extrémité du joint, et la fixation d'une éclisse plus rigide que le joint au premier profilé et au deuxième profilé tout en maintenant le joint. Le joint et l'éclisse peuvent appartenir à un assemblage tel que précédemment décrit, et comporter tout ou partie des caractéristiques détaillées ci-avant. Grâce au joint et à l'éclisse, le procédé d'assemblage peut être mis en œuvre de manière simple et rapide.

Dans certains modes de réalisation, le montage de la première extrémité du joint par rapport au bout du premier profilé et/ou le montage du bout du deuxième profilé par rapport à la deuxième extrémité du joint est effectué selon un mouvement ayant une composante non nulle transversalement audit profilé. En d'autres termes, le montage n'est pas limité au fait d'emmancher le joint par rapport aux profilés, mais peut aussi comprendre un mouvement transversal du joint par rapport aux profilés, qui est plus simple à réaliser pour un installateur. Le procédé d'assemblage est donc facilité.

Dans certains modes de réalisation, le montage de la première extrémité du joint par rapport au bout du premier profilé et/ou le montage du bout du deuxième profilé par rapport à la deuxième extrémité du joint comprend une déformation du joint. La déformation du joint, permise par le matériau élastomère, facilite le montage du joint et accélère donc le procédé d'assemblage. La déformation du joint est de préférence une déformation élastique, à l'exclusion d'une déformation plastique.

### Brève description des dessins

D'autres caractéristiques et avantages de l'objet du présent exposé ressortiront de la description suivante de modes de réalisation, donnés à titre d'exemples non limitatifs, en référence aux figures annexées.
La figure 1 est une vue en perspective d'un joint selon un mode de réalisation.
La figure 2 est une vue en perspective d'une éclisse selon un mode de réalisation.
La figure 3 est une vue en perspective de profilés réunis par un assemblage selon un mode de réalisation.
La figure 4 est une vue en coupe transversale selon le plan IV-IV de la figure 3.
La figure 5 est une vue en coupe transversale selon le plan V-V de la figure 3.
La figure 6 est une vue en coupe longitudinale selon le plan VI-VI de la figure 3.
La figure 7A, la figure 7B, la figure 7C et la figure 7D sont des vues en perspective illustrant un procédé d'assemblage selon un mode de réalisation.

### Description détaillée

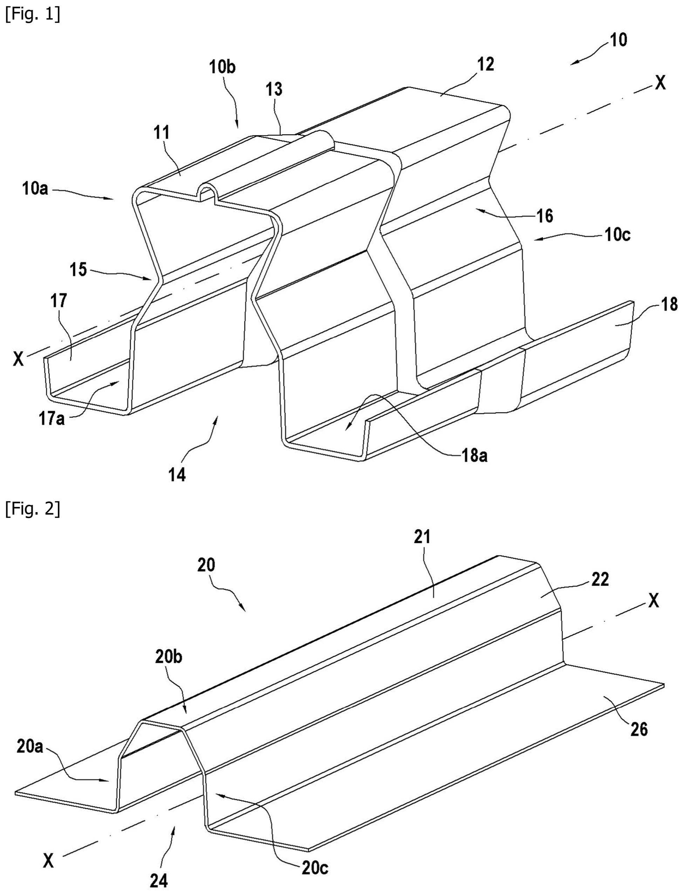

La figure 1 illustre, en perspective, un joint 10 selon un mode de réalisation. Comme indiqué précédemment, le joint 10 est en matériau élastomère, par exemple en caoutchouc de type EPDM (éthylène-propylène-diène monomère), TPE (thermoplastique élastomère), TPU (polyuréthane thermoplastique), ou TPV (thermoplastique vulcanisé).

Le joint 10 comprend une première extrémité 11 et une deuxième extrémité 12. Dans ce mode de réalisation, la première extrémité 11 est opposée à la deuxième extrémité 12 le long d'une direction longitudinale X commune. En variante, la première extrémité 11 pourrait s'étendre le long d'une première direction longitudinale X1, la deuxième extrémité 12 pourrait s'étendre le long d'une deuxième direction longitudinale X2, les directions X1 et X2 formant entre elles un angle non nul.

Selon l'exemple représenté, la première extrémité 11 et la deuxième extrémité 12 ont des sections transversales différentes l'une de l'autre et sont réunies par une transition 13. La transition 13 peut s'étendre continument entre la première extrémité 11 et la deuxième extrémité 12 afin d'empêcher que l'eau ne traverse le joint 10 au niveau de la transition. Par ailleurs, la transition 13 peut assurer un passage progressif, monotone, de la section de la première extrémité 11 vers la section de la deuxième extrémité 12. Par exemple, la transition 13 peut résulter d'une interpolation linéaire entre la première extrémité 11 et la deuxième extrémité 12 : la transition 13 suit un ensemble imaginaire de segments de droite reliant les portions respectivement les plus proches de la première extrémité 11 et de la deuxième extrémité 12.

La transition 13 peut être plus courte que chacune des extrémités 11, 12 dans la direction longitudinale X, par exemple d'un rapport au moins égal à 1:3, voire 1:5.

En section transversale, le joint 10 peut définir un renfoncement 14. Par exemple, le joint 10 peut avoir une section transversale qui soit à cheval sur la direction longitudinale X. Typiquement, le joint 10 peut avoir une forme générale en U, en V ou, comme illustré en oméga. Plus précisément, le joint 10 peut avoir deux flancs 10a, 10c opposés, se faisant face de part et d'autre de la direction longitudinale X et réunis l'un à l'autre directement ou par l'intermédiaire d'une partie de jonction 10b. Les flancs 10a, 10c et/ou la partie de jonction 10b peuvent s'étendre selon la direction longitudinale X.

Le joint 10 peut comprendre au moins une contre-dépouille en section transversale. En l'espèce, une première contre-dépouille 15 est prévue sur la première extrémité 11. Alternativement ou en complément, une deuxième contre-dépouille 16 est prévue sur la deuxième extrémité 12. Les contre-dépouilles 15, 16 peuvent s'étendre sur au moins l'un des flancs 10a, 10c, et sur tout ou partie de ces flancs 10a, 10c. Les contre-dépouilles 15, 16 peuvent prendre la forme d'un retrait des flancs 10a, 10c vers l'intérieur du renfoncement 14. Grâce au fait que le joint 10 est en matériau élastomère, les contre-dépouilles 15, 16 peuvent être écartées l'une de l'autre par déformation élastique du joint 10, ce qui permet d'élargir le renfoncement 14 de manière éventuellement temporaire.

Par ailleurs, le joint 10 peut comprendre au moins un canal formant gouttière pour guider le ruissellement de l'eau. A cet effet, un premier rebord 17 peut être formé sur la première extrémité 11 et/ou un deuxième rebord 18 peut être formé sur la deuxième extrémité 12. Les rebords 17, 18, peuvent faire saillie d'une partie inférieure ou empattement du joint 10, notamment de l'un et/ou l'autre des flancs 10a, 10c. Le canal 18a ainsi formé sur la deuxième extrémité 12, entre les rebords 18 et les flancs respectifs 10a, 10c, peut être dans le prolongement du canal 17a ainsi formé sur la première extrémité 11, entre les rebords 17 et les flancs respectifs 10a, 10c. Les canaux 17a, 18a peuvent être sensiblement parallèles à la direction longitudinale X.

La figure 2 illustre, en perspective, une éclisse 20 selon un mode de réalisation. L'éclisse 20 est ici une pièce entièrement distincte du joint 10. Toutefois, l'éclisse 20 et le joint 10 pourraient faire partie d'une pièce commune, pourvu que l'éclisse 20 soit plus rigide que le joint 10. L'éclisse 20 est par exemple en métal ou en alliage métallique. Comme on le verra par la suite, l'éclisse 20 joue un rôle de maintien mécanique de profilés et peut être dimensionnée dans cette perspective.

L'éclisse 20 peut être elle-même de type profilé au sens où elle s'étend principalement selon la direction longitudinale X et possède une section transversale constante ou sensiblement constante. En section transversale, l'éclisse 20 peut présenter deux flancs 20a, 20c opposés, se faisant face de part et d'autre de la direction longitudinale X et réunis l'un à l'autre directement ou par l'intermédiaire d'une partie de jonction 20b. Entre les deux flancs 20a, 20c, et, le cas échéant, la partie de jonction 20b, un renfoncement 24 est défini. Par ailleurs, sur l'un et/ou l'autre des flancs 20a, 20c, une ailette 26 peut faire saillie latéralement, vers un côté opposé au renfoncement 24. Les ailettes 26 peuvent prendre naissance à l'extrémité libre des flancs 20a, 20c respectifs.

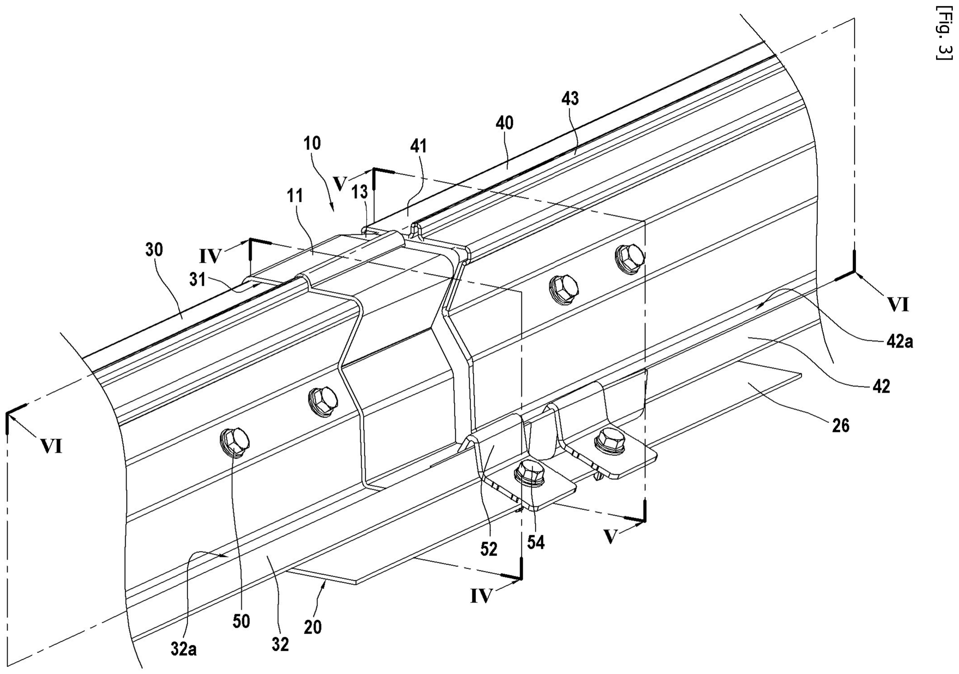

La figure 3 illustre, en perspective, une structure comprenant un premier profilé 30 et un deuxième profilé 40 maintenus bout à bout par un assemblage comprenant le joint 10 et l'éclisse 20. Les profilés 30, 40 peuvent être mis bout à bout, c'est-à-dire qu'un bout 31 du premier profilé 30 fait face à un bout 41 du deuxième profilé 40. Les profilés 30, 40 peuvent s'étendre tous deux dans la direction longitudinale X. Un jeu peut séparer les profilés 30, 40 l'un de l'autre, notamment dans la direction longitudinale X. Le cas échéant, comme on le verra par la suite, ce jeu peut recevoir une partie du joint 10 et/ou de l'éclisse 20.

Dans ce mode de réalisation, le premier profilé 30 et le deuxième profilé 40 sont identiques, toutefois, en toute généralité, le joint 10 et l'éclisse 20 proposés permettraient d'assembler entre eux des profilés différents, moyennant les adaptations de forme nécessaires. Les profilés 30, 40 sont ici de section constante, en forme générale d'oméga ; toutefois, des formes différentes et/ou des variations locales, a fortiori en dehors des bouts 31, 41, sont envisageables.

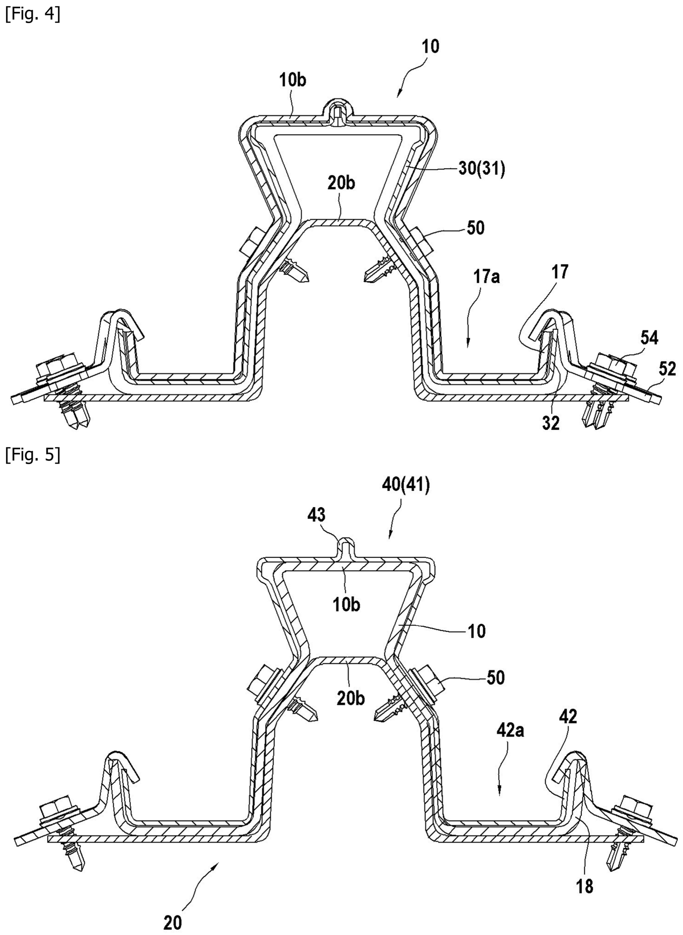

Les figures 4, 5 et 6 sont des vues en coupe transversale selon les plans IV-IV, V-V et VI-VI de la figure 3, respectivement.

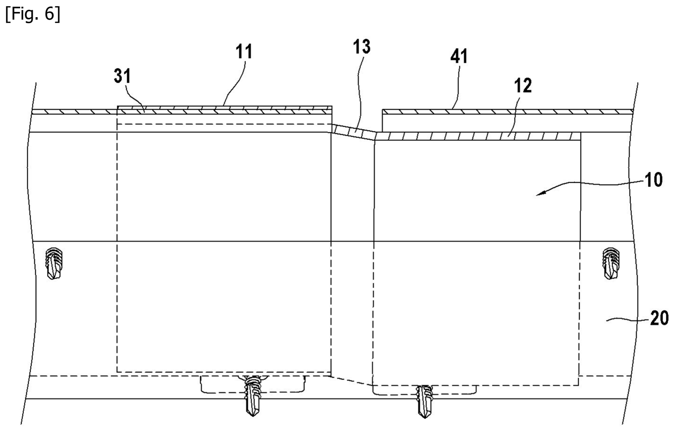

Comme il ressort des figures 3, 4 et 6, la première extrémité 11 du joint 10 est configurée pour épouser le bout 31 du premier profilé 30. La première extrémité 11 et le bout 31 ont donc des formes complémentaires. Plus précisément, la première extrémité 11 peut former une extrémité femelle configurée pour épouser un premier côté du bout 31 du premier profilé, à savoir le côté extérieur, c'est-à-dire le côté opposé au renfoncement 14. Ainsi, comme le montrent les figures 4 et 6, le bout 31 est reçu dans le renfoncement 14. La première extrémité 11 est, en section transversale, en contact avec la majorité voire l'intégralité du contour du bout 31.

En parallèle, comme il ressort des figures 3, 5 et 6, la deuxième extrémité 12 du joint 10 est configurée pour épouser le bout 41 du deuxième profilé 40. La deuxième extrémité 12 et le bout 41 ont donc des formes complémentaires. Plus précisément, la deuxième extrémité 12 peut former une extrémité mâle configurée pour épouser un deuxième côté (côté différent du premier côté) du bout 41 du deuxième profilé, à savoir le côté intérieur, c'est-à-dire le côté du renfoncement 14. Ainsi, comme le montrent les figures 4 et 6, la deuxième extrémité 12 est reçue dans le renfoncement formé par le bout 41. La deuxième extrémité 12 est, en section transversale, en contact avec la majorité voire l'intégralité du contour du bout 41. Plus précisément, la forme ici représentée pour la deuxième extrémité 12 ne pénètre pas à l'intérieur de la butée 43 du deuxième profilé 40, étant entendu que cela ne nuit pas à l'étanchéité de la structure. Alternativement, la deuxième extrémité 12 pourrait pleinement épouser l'intérieur de la butée 43. La butée 43, prévue par exemple sous la forme d'une nervure longitudinale, peut servir à séparer et positionner de manière fiable deux composants adjacents - typiquement, des panneaux solaires - qui reposent sur le deuxième profilé 40.

La figure 6 illustre que le joint 10 réalise une étanchéité en s'étendant depuis l'intérieur du deuxième profilé 40 jusqu'à l'extérieur du premier profilé 30. Le deuxième profilé 40, le joint 10 et le premier profilé 30 sont donc disposés les uns sur les autres, deux à deux, à la manière d'un tuilage. D'ailleurs, en référence de nouveau à la figure 3, il est préférable qu'en position de fonctionnement, les profilés 30, 40 soient inclinés et que la deuxième extrémité 12 du joint 10 soit située à une altitude plus élevée que la première extrémité 11 du joint 10. Ainsi, l'eau qui s'écoule sur l'extérieur du deuxième profilé 40 - le plus haut - peut ruisseler vers l'extérieur du joint 10 et être conduite, via la transition 13 et l'extrémité femelle (première extrémité 11), sur l'extérieur du premier profilé 30. Le tuilage précité est donc monté dans le sens qui favorise l'étanchéité.

L'éclisse 20 est configurée pour se fixer au premier profilé 30 et au deuxième profilé 40. L'éclisse 20 peut se fixer aux profilés 30, 40 par tout moyen adapté. En l'occurrence, on a représenté des vis, boulons ou analogues 50 qui traversent l'éclisse 20 et au moins l'un du premier profilé 30 et du deuxième profilé 40. Selon leur position dans la direction longitudinale X, les vis 50 peuvent traverser ou non le joint 10. Pour qu'elles ne traversent pas le joint 10, comme cela est représenté sur la figure 3, l'éclisse 20 peut être prévue plus longue que le joint 10, notamment longitudinalement. Les vis 50 peuvent alors être prévues sur la partie de l'éclisse 20 qui s'étend au-delà du joint 10.

Comme on le déduit des figures 3 à 6, l'éclisse 20 est insérée d'un côté des profilés 30, 40, en l'espèce dans le renfoncement 14.

L'éclisse 20 peut être configurée pour maintenir le joint 10 grâce à sa fixation aux profilés 30, 40. Par exemple, le joint 10 peut être au moins partiellement pris en sandwich entre l'éclisse 20 et l'un des profilés 30, 40, ce qui non seulement maintient le joint 10 en place mais permet aussi de le comprimer, ce qui renforce l'étanchéité réalisée. Alternativement ou en complément, le joint 10 pourrait être fixé à l'éclisse 20 de manière autonome, indépendamment des profilés 30, 40.

Dans la configuration illustrée, en l'espèce, au niveau du premier profilé 30 (figure 4), l'éclisse 20 peut être en contact avec le bout 31. Au niveau du deuxième profilé 40 (figure 5), l'éclisse 20 peut être en contact avec le joint 10, plus particulièrement la deuxième extrémité 12 qui est ainsi prise en sandwich entre le bout 41 d'une part et l'éclisse 20 d'autre part. Le serrage de l'éclisse 20 contre le deuxième profilé 40, grâce aux vis 50, apporte le niveau de maintien et de compression souhaité au joint 10.

Les profilés 30, 40 peuvent comporter des rebords 32, 42 délimitant des canaux 32a, 42a formant gouttière, par exemple des canaux latéraux similaires ou non aux canaux 17a, 18a du joint 10. Les canaux 17a, 18a du joint 10 peuvent d'ailleurs épouser au moins en partie les canaux 32a, 42a des profilés 30, 40, la transition 13 opérant alors une étanchéité entre les canaux 32a et les canaux 42a.

Pour renforcer la fixation des profilés 30, 40 à l'éclisse 20, les rebords 17, 18 peuvent être fixés aux rebords 32, 42 respectivement. A cet effet, des crapauds 52 peuvent être prévus. Selon un exemple, les crapauds 52 sont fixés sur les ailettes 26, par exemple au moyen de vis 54, et crochètent les rebords 17, 18 du joint 10 avec les rebords 32, 42 des profilés 30, 40. L'étanchéité est donc renforcée au niveau du passage entre le canal 42a et le canal 32a, via le joint 10. Cependant, ces crapauds sont optionnels et la structure proposée atteint de bonnes performances d'étanchéité même sans eux. S'ils sont présents, ils peuvent en outre être fixés différemment.

Les figures 4 et 5, en particulier, illustrent que lorsque l'éclisse 20 est fixée aux profilés 30, 40, l'éclisse 20 est au moins partiellement à distance du joint 10. En l'espèce, les flancs 20a, 20c épousent le profilé 30 ou la deuxième extrémité 12, mais la partie de jonction 20b de l'éclisse 20 se trouve à distance de la partie de jonction 10b du joint 10, et d'ailleurs de la partie de jonction correspondante des profilés 30, 40. Cela tient au fait que c'est le joint 10, dans son rôle d'étanchéité, qui épouse la forme des bouts des profilés 30, 40. Ce faisant, l'éclisse 20 peut être prévue de forme plus simple pour réduire les contraintes de conception et les coûts de fabrication. La simplicité de l'éclisse 20 apparaît particulièrement en comparant la figure 2 à la figure 1.

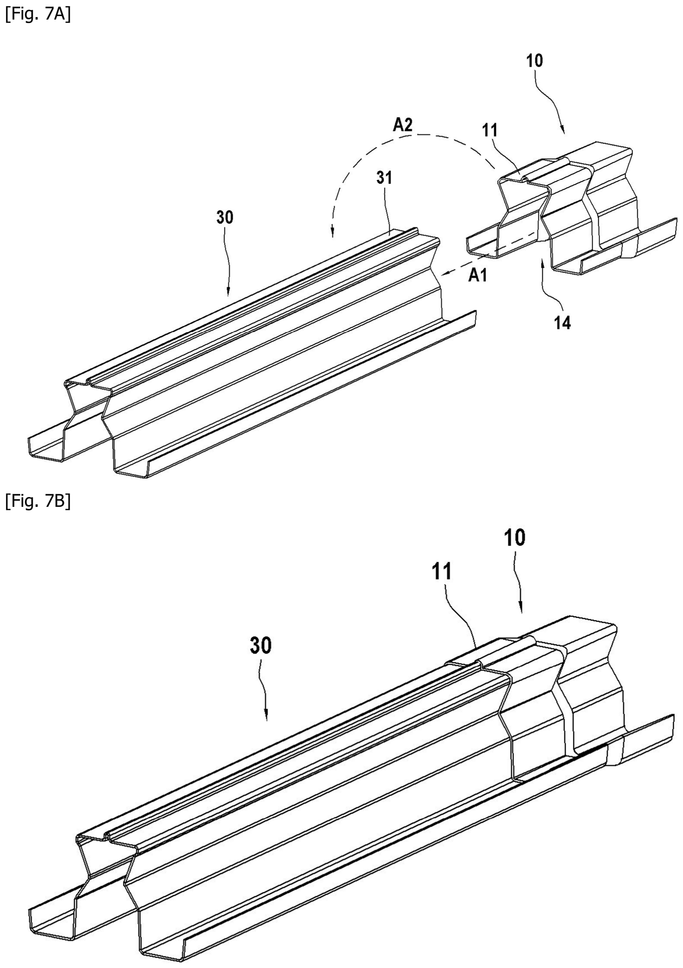

Un procédé d'assemblage d'un premier profilé 30 par rapport à un deuxième profilé est décrit en référence aux figures 7A à 7D.

La figure 7A illustre la fourniture du premier profilé 30 et du joint 10 en matériau élastomère. Une première extrémité 11 du joint 10 peut être montée de façon à épouser un bout 31 du premier profilé 30. Ce montage peut être réalisé en faisant coulisser le joint 10 le long du profilé 30 dans la direction longitudinale X (flèche A1). Cependant, grâce au fait que le joint 10 est en matériau élastomère, le joint 10 peut être déformé élastiquement pour élargir le renfoncement 14 et permettre l'emmanchement du joint 10 sur le profilé 30 (ou l'inverse, le cas échéant) selon un mouvement ayant une composante transverse non nulle (flèche A2, par exemple). Le premier profilé 30 et le joint 10 peuvent être insérés l'un dans l'autre au maximum jusqu'à ce que la butée 43 bute contre la fin du logement correspondant du joint 10. Il en résulte la configuration illustrée sur la figure 7B.

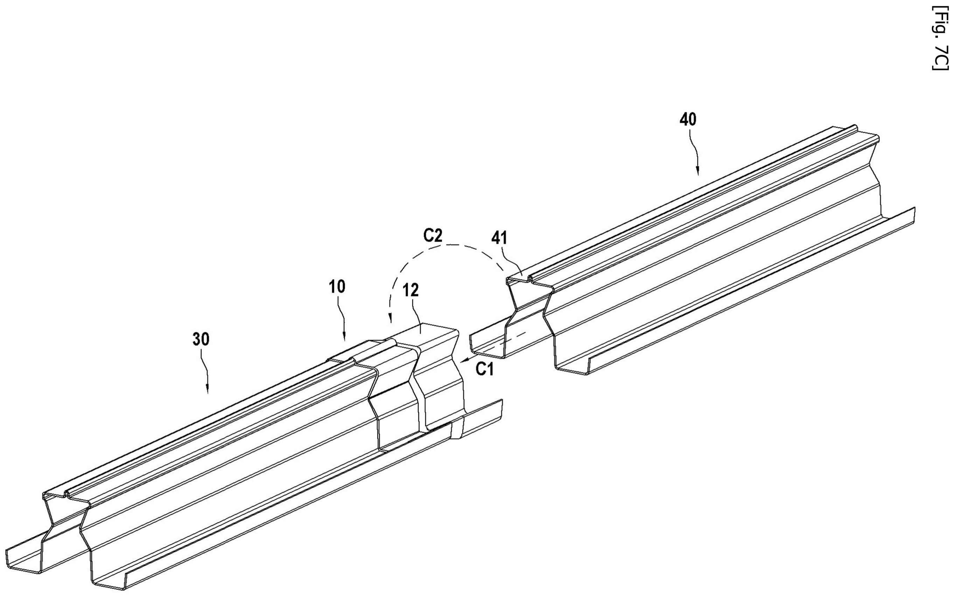

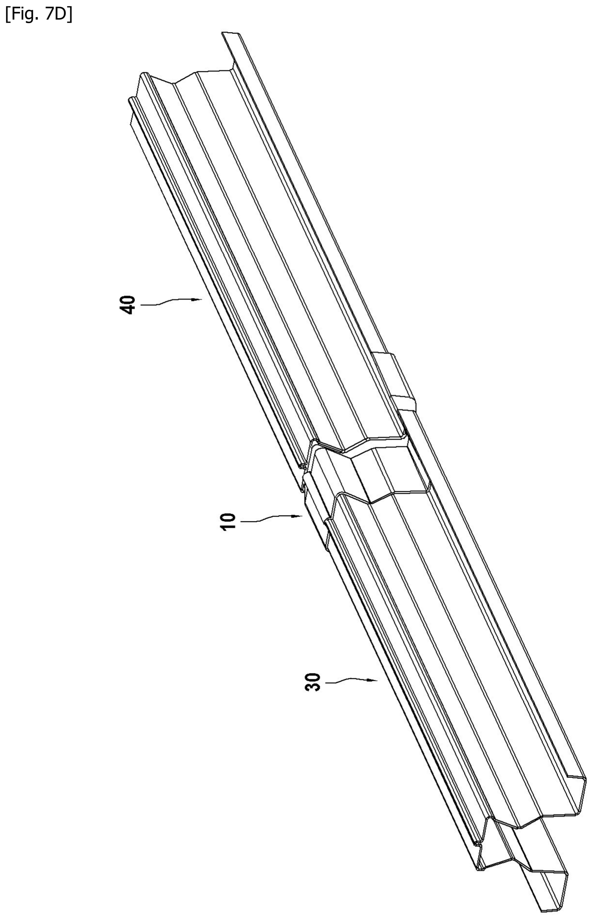

Le procédé comprend ensuite, comme illustré sur la figure 7C, la fourniture d'un deuxième profilé 40 et le montage d'un bout 41 du deuxième profilé 40 de façon à épouser une deuxième extrémité 12 du joint 10. Comme pour le premier profilé 30, le montage peut se faire par coulissement selon la direction longitudinale X (flèche C1) ou par un mouvement ayant une composante transverse non nulle (flèche C2, par exemple), grâce à la déformabilité du joint 10. Il en résulte la configuration illustrée sur la figure 7D.

Dans cet exemple, le joint 10 est assemblé au deuxième profilé 40 après avoir été assemblé au premier profilé 30, mais cet ordre pourrait être inversé.

Ensuite, une éclisse 20 plus rigide que le joint 10 peut être fixée au premier profilé 30 et au deuxième profilé 40 tout en maintenant le joint 10, par exemple grâce aux vis 50 et crapauds 52 décrits précédemment. Il en résulte la configuration illustrée sur la figure 3, étant précisé que les figures 3 à 6 illustrent la configuration obtenue avant serrage des vis 50, 54.

La structure ainsi montée peut être utilisée dans le cadre d'une structure de toit ou d'une ombrière, par exemple dans laquelle les profilés forment des longerons pour le maintien de panneaux solaires. D'autres utilisations sont bien entendu envisageables, notamment dans le domaine des gouttières et systèmes d'étanchéité.

Bien que la présente description se réfère à des exemples de réalisation spécifiques, des modifications peuvent être apportées à ces exemples sans sortir de la portée générale de l'invention. En outre, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Assemblage pour le maintien bout à bout d'un premier profilé (30) par rapport à un deuxième profilé (40), comprenant un joint (10) en matériau élastomère, le joint (10) ayant une première extrémité (11) configurée pour épouser un bout (31) du premier profilé (30) et une deuxième extrémité (12) configurée pour épouser un bout (41) du deuxième profilé (40), le joint (10) étant configuré pour être intercalé entre le premier profilé (30) et le deuxième profilé (40) à la façon d'un tuilage, et une éclisse (20) plus rigide que le joint et configurée pour se fixer au premier profilé (30) et au deuxième profilé (40) tout en maintenant le joint (10).

2. Assemblage selon la revendication 1, dans lequel le joint (10) comprend au moins une contre-dépouille (15, 16) en section transversale.

3. Assemblage selon la revendication 1 ou 2, dans lequel la première extrémité (11) forme une extrémité femelle configurée pour épouser un premier côté du bout (31) du premier profilé (30) et la deuxième extrémité (12) forme une extrémité mâle configurée pour épouser un côté différent du bout (41) du deuxième profilé (40).

4. Assemblage selon l'une quelconque des revendications 1 à 3, dans lequel le joint (10) comprend une transition (13) continue et monotone entre la première extrémité (11) et la deuxième extrémité (12).

5. Assemblage selon l'une quelconque des revendications 1 à 4, dans lequel le joint (10) est configuré pour être au moins partiellement pris en sandwich entre l'éclisse (20) et l'un des profilés (40).

6. Assemblage selon l'une quelconque des revendications 1 à 5, dans lequel, en section transversale, le joint (10) définit un renfoncement (14).

7. Assemblage selon l'une quelconque des revendications 1 à 6, dans lequel l'éclisse (20) est plus longue que le joint (10).

8. Assemblage selon l'une quelconque des revendications 1 à 7, dans lequel, lorsque l'éclisse (20) est fixée aux profilés (30, 40), l'éclisse (20) est au moins partiellement à distance du joint (10).

9. Structure, telle qu'une ombrière, comprenant deux profilés (30, 40) maintenus bout à bout par un assemblage selon l'une quelconque des revendications 1 à 8, optionnellement dans laquelle les profilés forment une gouttière.

10. Structure selon la revendication 9, dans laquelle les profilés (30 , 40) sont fixés l'un à l'autre par au moins une vis (50) traversant le premier profilé (30) et/ou le deuxième profilé (40), et traversant l'éclisse (20.

11. Structure selon la revendication 9 ou 10 en combinaison avec la revendication 3, dans laquelle les profilés (30, 40) sont inclinés etl'extrémité mâle du joint (10) est située à une altitude plus élevée que l'extrémité femelle du joint (10).

12. Procédé d'assemblage d'un premier profilé (30) par rapport à un deuxième profilé (40), comprenant la fourniture d'un premier profilé (30), la fourniture d'un joint (10) en matériau élastomère, le montage d'une première extrémité (11) du joint (10) de façon à épouser un bout (31) du premier profilé (30), le montage d'un bout (41) d'un deuxième profilé (40) de façon à épouser une deuxième extrémité (12) du joint (10), le joint (10) étant intercalé entre le premier profilé (30) et le deuxième profilé (40) à la façon d'un tuilage, et la fixation d'une éclisse (20) plus rigide que le joint (10) au premier profilé (30) et au deuxième profilé (40) tout en maintenant le joint (10).

13. Procédé d'assemblage selon la revendication 12, dans lequel le montage de la première extrémité (11) du joint (10) par rapport au bout (31) du premier profilé (30) et/ou le montage du bout (41) du deuxième profilé (40) par rapport à la deuxième extrémité (12) du joint (10) est effectué selon un mouvement (A2, C2) ayant une composante non nulle transversalement audit profilé (30, 40).

14. Procédé d'assemblage selon la revendication 12 ou 13, dans lequel le montage de la première extrémité (11) du joint (10) par rapport au bout (31) du premier profilé (30) et/ou le montage du bout (41) du deuxième profilé (40) par rapport à la deuxième extrémité (12) du joint (10) comprend une déformation du joint.
